# EUROPÄISCHE PATENTSCHRIFT

(11) **EP 0 619 871 B1**
(45) Veröffentlichungstag und Bekanntmachung des Hinweises auf die Patenterteilung: **18.09.1996**
(21) Anmeldenummer: 93920642.1
(22) Anmeldetag: 06.10.1993
(51) Int. Cl.: G01B 5/06, G01B 21/08, B02C 4/36

(54) **VERFAHREN ZUM MESSEN DER DICKE EINER SCHICHT UND VORRICHTUNG ZUR DURCHFÜHRUNG DES VERFAHRENS**
METHOD OF MEASURING THE THICKNESS OF A LAYER, AND A DEVICE FOR CARRYING OUT THE METHOD
PROCEDE PERMETTANT DE MESURER L'EPAISSEUR D'UNE COUCHE ET DISPOSITIF PERMETTANT LA MISE EN OEUVRE DE CE PROCEDE

(30) Priorität: 30.10.1992 CH 3386/92
(43) Veröffentlichungstag der Anmeldung: 19.10.1994
(73) Patentinhaber: BÜHLER AG, CH-9240 Uzwil (CH)
(72) Erfinder: GREMINGER, Hansueli, CH-9244 Niederuzwil (CH); SCHOENENBERGER, Niklaus, CH-9100 Herisau (CH)
(74) Vertreter: Révy von Belvárd, Peter
(86) Internationale Anmeldenummer: CH9300238
(87) Internationale Veröffentlichungsnummer: WO9410530

(56) Entgegenhaltungen:
- DE-A- 3 634 715
- DE-A- 3 942 697
- DE-C- 3 153 304
- GB-A- 2 084 735
- US-A- 3 525 929
- US-A- 3 866 115

## Beschreibung

Die Erfindung bezieht sich auf ein Verfahren zum Messen der Dicke einer Schicht von pasten- oder teigartigem Mahlgut auf einer bewegten Fläche und auf eine Schichtdickenmesseinrichtung zur Durchführung des Verfahrens.

Der Erfindung liegt die Aufgabe zugrunde, ein einfach durchzuführendes Verfahren zu schaffen, das es gestattet, die Dicke einer Schicht von Mahlgut festzustellen, ohne dass der Mahlprozess beispielsweise in einem Walzwerk beeinflusst wird. Um stets ein Produkt gleichbleibend hoher Qualität zu erzielen, muss der Verarbeitungsprozess und hiebei insbesondere das Mahlen des pasteusen Schokolade-Rohmaterials unter vorherbestimmten und kontrollierten Bedingungen durchgeführt werden, wobei die Erfassung der Schichtdicke an einer Mahlfläche, wie an einer Walze des Mahlwerkes, ein optimales Kriterium zur Qualitätssicherung darstellt. Fernerhin liegt der Erfindung die Aufgabe zugrunde eine Schichtdickenmesseinrichtung zu schaffen, mit der das Verfahren einfach, schnell und ökonomisch durchgeführt werden kann.

Bei der Lösung dieses Problems liegt ein erster Schritt in der Erkenntnis der besonderen Eigenschaften pasten- bzw. teigartigen Mahlgutes, das die Tendenz hat, sich an zwei gegeneinander gedrückten Rotationskörpern über deren Oberfläche zu verteilen. Nun muss ein mechanischer Messfühler mit einem bestimmten Druck gegen die zu messende Schicht gedrückt werden, um eine vorbestimmte Anlagekraft des Fühlers zu sichern. Dies muss aber dann zwangsläufig bewirken, dass die Rolle, die beispielsweise am Fühler angebracht ist und auf der Schicht aufliegt, etwa mit der Geschwindigkeit der das Mahlgut tragenden Fläche, also etwa mit der Umfangsgeschwindigkeit der das Mahlgut tragenden Walze eines Walzwerkes umläuft, wobei unvermeidbar ist dass sich auf der Messrolle eine gewisse Mahlgutschicht aufbaut, die dann das Messergebnis verfälscht. Im zweiten Schritt auf dem Wege zur Erfindung ist also die Aufgabe zu lösen, wie diese nachteilige Erscheinung bzw. dieser Zustand verhindert werden kann.

Gemäss der Erfindung werden bei einem Verfahren der eingangs erwähnten Art die kennzeichnenden Merkmale des Anspruches 1 vorgeschlagen. Durch diese verblüffend einfache Massnahme wird derjenige Effekt vermieden, der bisher die Anwendung solcher Schichtdickenmesser in der Praxis verhindert hat, nämlich der Effekt des Aufwickelns der Schicht auf der Messrolle. Überraschend ist diese Lösung deshalb, weil man denken sollte, es würde sich dabei die Schicht vor der Messrolle aufstauen und so erst recht eine Verfälschung der Messergebnisse bringen. Praktische Versuche haben aber erwiesen, dass eine solche Befürchtung nicht zutrifft, sondern dass vielmehr eine solche Massnahme eine hohe Messgenauigkeit bei einfachster und platzsparender Konstruktion erzielt werden kann.

Im Prinzip wäre die Bremsung durch Einsatz einer Reibkraft erzielbar. Es hat sich jedoch herausgestellt, dass es vorteilhaft ist, der Bremskraft eine vorbestimmte Grösse zu erteilen, was bei blosser Reibung meist nicht zu erzielen ist, weil sich die Reibkraft mit der Temperatur, mit der Feuchtigkeit usw. zu stark verändert. Die Bremsung im vorbestimmten Ausmass kann nach einem weiteren Merkmal der Erfindung auch dadurch erreicht werden, dass die Messrolle motorisch mit einer geringeren Geschwindigkeit angetrieben wird, als die Bewegungsgeschwindigkeit der Schicht bzw. der Fläche vorgesehen ist. Durch den motorischen Antrieb der Messrolle kann sehr einfach eine vorbestimmte und an die Bewegungsgeschwindigkeit der Schicht angepasste Rotationsgeschwindigkeit eingestellt werden.

Ein anderes Problem, das mit der Auflage der Messgenauigkeit verknüpft ist, ist das Problem der Nullpunkteinstellung, d.h. der Bezugsebene, von der aus die Dicke der Schicht gemessen werden soll. In weiterer Ausgestaltung der Erfindung wird daher vorgeschlagen, dass das Ausgangssignal des Sensors vor dem Vorhandensein bzw. vor dem Entstehen der Schicht auf der bewegten Fläche gespeichert wird und während des Vorhandenseins der Schicht auf der bewegten Fläche mit dem vorab gespeicherten Signal zumindest periodisch verglichen wird. Danach lässt sich das Vergleichsresultat für wenigstens einen der folgenden Schritte heranziehen: Regelung der Bewegungsgeschwindigkeit der die Schicht tragenden Fläche, Regelung der Zufuhrmenge des Mahlgutes, Regelung des Druckes, der Temperatur, der Viskosität des Mahlgutes, Sicherung gegen Trockenlauf der Walzen und/oder zur Anzeige der Dicke der Schicht.

Ferner wird in weiterer Ausgestaltung der Erfindung vorgeschlagen, dass zwei, vorzugsweise auch quer zur Bewegungsrichtung der Fläche, wie die zylindrische Oberfläche einer Walze eines Walzwerkes, z.B. gegen Federkraft, bewegliche Messrollen vorgesehen sind, denen ein ihre Bewegung und/oder ihre Position zumindest der Höhe nach über der Walze detektierender elektronischer Sensor zugeordnet ist.

Wird nach einem weiteren Merkmal der Erfindung jede Messrolle mit einem Generator drehfest gekuppelt und dessen induktiv erzeugtes Bremsmoment zur geschwindigkeitsabhängigen Bremsung der Messrolle herangezogen, so kann eine selbsttätige Regelung der Bremskraft in äusserst einfacher Weise erzielt werden, was wiederum den baulichen Aufwand gering hält und darüber hinaus nahezu wartungsfreien Betrieb ermöglicht.

Besonders gute, d. h. genaue Messergebnisse werden erzielt, wenn nach bevorzugter Ausführungsform der Erfindung das Verhältnis der Breite der Umfangsfläche jeder Messrolle an der Auflagefläche auf der Schicht bzw. auf der Walze zu ihrem Durchmesser kleiner als 1:5, insbesondere kleiner als 1:10 gewählt wird. Damit wird nämlich ebenfalls der Tendenz der Schicht zum Aufwickeln auf die Messrolle entgegengewirkt.

In weiterer Ausgestaltung der Erfindung wird vorgeschlagen, dass das Ausgangssignal des Sensors über eine Filter- und Verstärkeranordnung einer Auswertestufe zugeführt ist, die eine Umschaltstufe zur wahlweisen Zuführung des vom Sensor abgeleiteten, verstärkten und gefilterten Signales an eine Speichereinrichtung oder an eine Vergleichseinrichtung aufweist, der einerseits das aus der Speichereinrichtung auslesbare Signal und andererseits das zeitlich aktuelle, vom Ausgangssignal des Sensors abgeleitete Signal zugeführt sind, dass mit dem Ausgang der Vergleichseinrichtung ein Eingang einer Regeleinrichtung für mindestens einen Parameter zur Steuerung des Walzwerkes verbunden ist, und dass ein Wahlschalter vorgesehen ist, der zur Betätigung der Umschalteinrichtung in Abhängigkeit vom Betriebszustand des Walz, wie Normalbetrieb oder Anfahr- bzw. Auslaufbetrieb, vorgesehen ist. Neben der hohen Messgenauigkeit wird somit auch das Erfordernis der Nullpunkteinstellung mit geringem apparativem Aufwand zuverlässig gelöst. Unter dem Begriff Speichereinrichtung soll jegliche Schaltung bzw. Einrichtung verstanden werden, die imstande ist, einen bestimmten, den Nullpunkt repräsentierenden Wert festzuhalten und wiederzugeben.

Ungenauigkeiten des Messergebnisses, hervorgerufen durch die Exzentrizität der Walze selbst bzw. Unebenheiten der die Schicht tragenden Fläche können dadurch vermieden werden, dass das Ausgangssignal des Sensors zur Reduzierung bzw. Eliminierung von durch diese Exzentrizitäten der Walze hervorgerufenen Welligkeiten des Signales über ein Tiefpassfilter zumindest mittelbar an die Umschalteinrichtung geführt ist.

Weitere Einzelheiten der Erfindung ergeben sich an Hand der nachfolgenden Beschreibung eines in der Zeichnung schematisch dargestellten Ausführungssbeispieles.
- Fig. 1: zeigt ein Schaltschema für eine erfindungsgemässe Schichtdickenmesseinrichtung, die vorzugsweise, wie dargestellt, zur Regelung eines Walzwerkes eingesetzt wird;
- Fig. 2: einen gegenüber Fig. 1 vergrösserten Schnitt durch das Gehäuse des Schichtdickenmessers, wozu
- Fig. 3: eine Druntersicht veranschaulicht.

An einem, im wesentlichen gemäss der DE-C-31 53 304 ausgebildeten Walzwerk WW ist ein Schichtdickenmesser SM vorgesehen. Dieser besitzt eine auf der auf der obersten Walze liegenden Schicht anliegenden Messrolle, deren Abstand von der Walze über eine Induktionsspule als Sensor bestimmt wird.

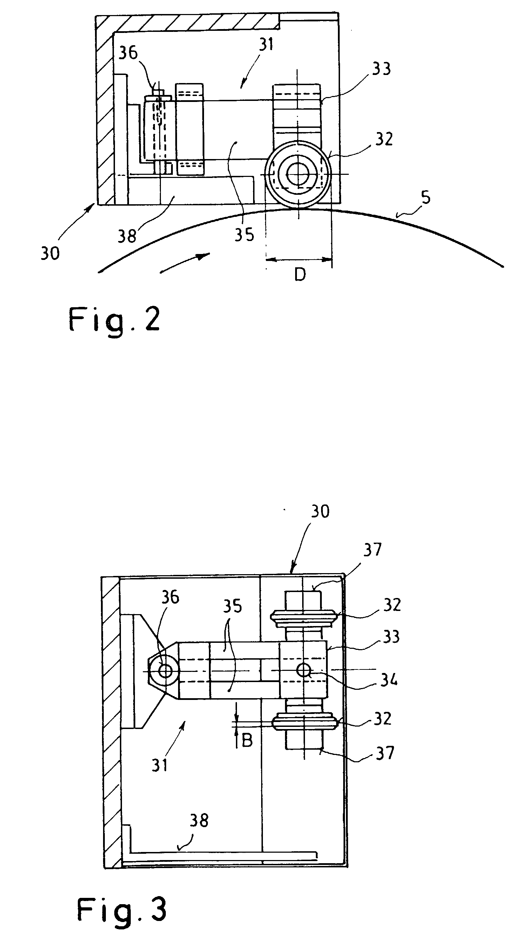

Die Fig. 2 und 3 zeigen die Einzelheiten dieses Schichtdickenmessers SM, wobei im vorliegenden Falle innerhalb eines Gehäuses 30 ein hebelartiger Träger 31 mittig zwischen zwei Messrollen 32 angeordnet ist. Im Prinzip könnte an Stelle einer mittigen Anordnung des Trägers 31 auch ein gabelförmiger Träger vorgesehen sein, der zwischen seinen Gabelarmen eine einzige, gegebenenfalls auch breiter ausgebildete Messrolle lagert. Allerdings ist am freien Ende der Trägeranordnung 31 ein Sensorgehäuse 33 vorgesehen, innerhalb dessen ein aus einer Gehäuseöffnung heraus messender Sensor 34 (Induktionsspule, gegebenenfalls aber auch Kondensatorplatte) angeordnet ist. Dadurch ist eine symmetrische Ausbildung von Sensor 34 und Messrolle 32 gegeben.

Die Traganordnung 31 weist zweckmässig Federarme 35 auf, die ein leichtes Auslenken der Messrollen 32 gestatten, falls das Gehäuse 30 einmal nicht so montiert würde, dass die Messrollen 32 mit ihren Ebenen genau in der Bewegungsrichtung der jeweiligen Walze 5 liegen. Eine weitere Massnahme, die kumulativ oder alternativ zur automatischen Korrektur von Toleranzen bei der Montage des Gehäuses 30 angewendet werden kann, besteht darin, dass die Traganordnung 31 um eine zur Laufrichtung der Walze 5 quer liegende Achse 36 verschwenkbar ist.

Dazu können die Federarme 35 so ausgebildet sein, dass die Laufrollen 32 federnd gegen die Oberfläche der Walze 5 gedrückt werden bzw. elastisch ausweichen können. Gewünschtenfalls kann auch eine kardanische Aufhängung der Trageinrichtung 31 vorgesehen sein.

Es wurde eingangs bereits erwähnt, dass die Messgenauigkeit durch Vermeidung der Bildung einer Schicht auf den Messrollen 32 dadurch erhöht werden kann, dass deren Umfangsgeschwindigkeit kleiner gehalten wird, als die der sie reibungsschlüssig mitnehmenden Walze 5. Zwar mag sich ein Schlupfverlust aus natürlichen Ursachen ergeben, doch reicht dieser nicht aus, um die Bildung einer Schicht aus dem auf der Walze 5 vorliegenden pastösen bzw. teigigen Mahlgut am Umfange der jeweiligen Messrollen 32 zu verhindern. Deshalb ist der jeweiligen Messrolle 32 eine Bremseinrichtung 37 zugeordnet. Diese kann an sich eine Reibungsbremse sein, doch ist es zuverlässiger, wenn eine besser definierte Bremskraft ausgeübt wird, die allenfalls von der Geschwindigkeit der jeweiligen Walze 5 abhängig ist. Zu diesem Zwecke sind die Bremseinrichtungen 37 generatorartig ausgebildet, d.h. es ist eine Bremsung durch Erzeugung von Induktionsströmen in den Bremseinrichtungen 37 vorgesehen. Alternativ wäre es auch denkbar, die Messrollen 32 von Motoren antreiben zu lassen, die den Messrollen 32 eine geringere Geschwindigkeit erteilen, als der Umfangsgeschwindigkeit der Walze 5 entspricht.

Eine weitere, die Vermeidung von Anhaftungen des zu mahlenden Materiales fördernde Massnahme liegt darin, dass die Messrollen 32 relativ schmal ausgebildet sind, d.h. dass das Verhältnis der Breite B an der Schicht auf der Walze 5 zur Anlage kommenden Umfangsfläche zu ihrem Durchmesser D kleiner ist, als 1:5, insbesondere kleiner als 1:10. Zwar würde man annehmen, es bestünde die Gefahr eines Einschneidens derart dünner Messrollen in die Schicht auf der Walze 5, und damit die Gefahr einer Messungenauigkeit. Ganz im Gegenteil hat sich aber überraschend gezeigt, dass diese Massnahme, insbesondere im Zusammenhang mit der Bremsung über die Bremseinrichtungen 37, eher zu einer Art "Selbstreinigungseffekt" der Oberflächen dieser Rollen 32 führt.

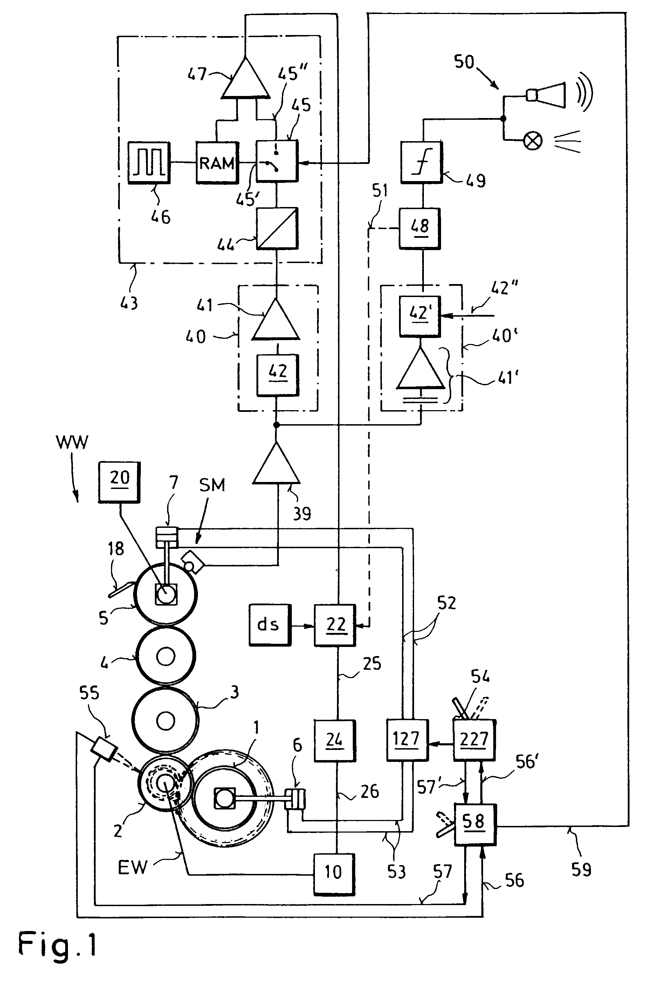

Die Signale des Sensors 34 werden entlang der Traganordnung 31 etwa bis zur Drehachse 36 geführt, so dann entlang einer Gehäusewand bis zu einem Kabelträger 38, von wo die Signale nach aussen gelangen. Gemäss Fig. 1 werden die Signale sodann einem Vorverstärker 39 zugeführt, dessen Ausgang mit einer verstärkenden und filternden Anordnung 40 verbunden ist. Die Anordnung 40 kann beispielsweise einen Verstärker 41 sowie ein Tiefpassfilter 42 umfassen (gegebenenfalls auch in umgekehrter Reihenfolge), wobei das Tiefpassfilter dazu dient, Welligkeiten des Signales aufgrund von Exzentrizitäten der Walze auszufiltern.

Im Anschluss an die filternde und verstärkende Anordnung 40 gelangt das Signal in eine Auswertungsschaltung 43. Diese Schaltung 43 kann einen Analog/Digital-Wandler 44 aufweisen, um das analog ankommende Signal in ein digitales umzuwandeln. Anschliessend gelangt das digitale Signal an eine Schaltstufe 45, die das Signal an einen ihrer Ausgänge 45' oder 45" verteilt.

Am Ausgang 45' liegt ein von einem Taktgenerator 46 betriebener Speicher RAM. Der Ausgang 45" der Schaltstufe 45 bildet den Eingang eines Komparators 47, dessen anderer Eingang vom Ausgang des Speichers RAM gebildet wird.

Die Ausgangssignale des Vorverstärkers 39 werden aber auch einer weiteren filternden Verstärkerstufe 40' zugeführt, die einen Verstärker mit Wechselstromkopplung 41' sowie ein Bandpassfilter 42' umfasst. Die Frequenzen dieses Filters 42' sind gegebenenfalls über einen Stelleingang 42" einstellbar.

Mit dieser Filteranordnung 40' lässt sich erkennen, wenn sich Unregelmässigkeiten aufgrund eines abgenützten Abstreifmessers 18 an der Walze 5 ergeben. Die von dieser Filteranordnung 40' hindurchgelassenen Signale werden zweckmässig einer Gleichrichterstufe 48 zugeführt, an die ein Schwellwertschalter 49 angeschlossen ist. Uebersteigt das Signal aus der Gleichrichterstufe 48 einen vorbestimmten Schwellwert, d.h. sind die Signaländerungen pro Umlauf der Walze 5 zu gross, so deutet dies an, dass das Abstreifmesser 18 abgenützt ist und geschliffen oder erneuert gehört. Zu diesem Zwecke ist eine entsprechende akustische und/oder visuelle Alarmeinrichtung 50 vorgesehen.

Für eine Zeit mag aber das Signal an der Gleichrichterstufe 48 gerade noch unter dem Schwellwert der Stufe 49 liegen und kann gegebenenfalls, wie strichliert angedeutet ist, einer Leitung 51 zugeführt werden, um als Korrekturwert für die Komparatoreinrichtung 22 zu dienen. Eine derartige Komparatoreinrichtung an einem Walzwerk ist in der DE-PS-31 53 304 beschrieben und dient der Regelung der Geschwindigkeit der Einzugwalzen-Antriebswelle, die ein oder zwei Einzugwalzen 1, 2 mit entsprechend geregelter Geschwindigkeit über einen Motor 10 antreibt, wogegen mindestens zwei weitere Walzen 3-5 von einem gesonderten Motor 20 angetrieben werden. An der letzten Walze 5 liegt dann in bekannter Weise ein Abstreifmesser 18 an. Für die Einzugwalzen 1, 2 einerseits und die Walzen 3-5 anderseits ist je eine Andruckeinrichtung 6 bzw. 7 vorgesehen, die über eine hydraulische Steuereinrichtung 127 betätigbar sind.

Wie besonders aus Fig. 2 hervorgeht, liegt ja nun die jeweilige Messrolle 32 im Normalbetrieb an der Oberfläche der auf der Walze 5 befindlichen Materialschicht an. Ein Problem bildet nun die Feststellung des exakten Nullpunktes, d.h. jenes Signales, das sich bei Anliegen der jeweiligen Messrolle 32 unmittelbar an der Oberfläche der Walze 5 ergibt.

Zu diesem Zwecke sind in Fig. 1 zwei Möglichkeiten dargestellt, die jeweils für sich oder in der gezeigten Kombination verwendet werden können. Es ist ersichtlich, dass die den Walzenandruck bewirkenden Zylinder 6 und 7 über je ein Paar von Leitungen 52 und 53 mit einer hydraulischen Steuerstufe 127 verbunden sind, die vorzugsweise im wesentlichen der in der DE-PS-30 16 785 gezeigten Steuerung mit einem Umsteuerventil entspricht. Dementsprechend ist es möglich, aus einem Normalbetriebszustand mindestens in einen gelösten Zustand der Walzen zu schalten, in welchem die Walzen nicht gegeneinander gepresst werden. Die Umsteuerung erfolgt mittels einer elektrisch wirkenden, manuellen Steuerung 227 mit einem Steuerhebel 54.

Ferner ist aber auch eine an sich bekannte Einrichtung 55 zur Trockenlaufsicherung vorgesehen. Diese kann beispielsweise entsprechend der DE-OS-36 34 715 ausgebildet sein, so dass Einzelheiten ihrer Funktion nicht beschrieben werden müssen. Im wesentlichen wird mit Hilfe des Gerätes 55 die Walzenoberfläche der Walze 2 optisch überwacht, wobei das Walzwerk WW über eine Ausgangssignalleitung 56 bzw. 56' und die elektrische Steuereinrichtung 227 automatisch ausser Betrieb gesetzt wird, falls an der Oberfläche der Walze 2 kein Produkt mehr vorhanden sein sollte (Trockenlauf). Umgekehrt wird das Gerät 55 auch von der Stellung des Hebels 54 gesteuert, indem es über eine Leitung 57, 57' abgeschaltet wird, wenn das Walzwerk WW manuell abgeschaltet wird.

Die beiden Leitungsabschnitte 57 und 57' bzw. 56 und 56' sind über einen Wahlschalter 58 miteinander verbunden. Der Wahlschalter 58 ist an eine Ausgangsleitung 59 angeschlossen, mit der die Schaltstufe 45 gesteuert wird. Wahlweise kann dabei die Steuerung der Schaltstufe 45 in Abhängigkeit des Ausgangssignales der Trockenlaufsicherung 55 und/oder von der Position des Hebels 54 erfolgen.

Wenn nun also das Walzwerk WW in Betrieb gesetzt wird, die Schicht des zu vermahlenden Materials also noch nicht an der Walze 5 im Bereiche der Messrollen 32 angelangt ist, wird das Ausgangssignal des Messfühlers SM über die Stufen 39 und 40 sowie 44 zunächst an den Ausgang 45' der Schaltstufe 45 zum Speicher RAM geführt und dort gespeichert. Somit ist der exakte Nullpunkt festgestellt.

Sobald aber die Schicht die Messrollen 32 erreicht hat bzw. nach einer vorbestimmten Zeit (zu welchem Zwecke die Schaltstufen 45 oder 58 mit einem entsprechenden Zeitgeber versehen sein können) wird die Schaltstufe 45 umgepolt, so dass die weiteren Signale des Schichtdickenmessers SM an den Ausgang 45" gelangen. Gleichzeitig wird der Speicher RAM über den Ausgang 45' in den Lesezustand geschaltet, so dass dem Komparator 47 einerseits das IST-Signal über die Leitung 45" und gleichzeitig das Nullpunktsignal aus dem Speicher RAM zugeführt wird, so dass ein exakter Schichtdickenvergleich stattfinden kann. Das Ausgangssignal des Komparators 47 wird dann zum Vergleich mit dem Signal des Sollwertgebers ds dem Komparator 22 aus der DE-PS-31 53 304 bekannten Regelung der Geschwindigkeit der Einzugwalzenwelle EW zugeführt.

Es versteht sich, das Messignal vom Ausgang des Komparators 47 auch in anderer Weise verwendet werden könnte, beispielsweise zu einer blossen Anzeige der Schichtdicke, zur Regelung des Druckes, der Temperatur, der Viskosität des Mahlgutes usw.

## Patentansprüche

1. Verfahren zum Messen der Dicke einer Schicht von pastenoder teigartigem Mahlgut auf einer bewegten Fläche, gegen welche Fläche eine beweglich gelagerte Messrolle (32) gelegt wird, so dass während der Bewegung der mit der Schicht versehenen Fläche die Auslenkung der Messrolle (32) quer zur Bewegungsrichtung der Fläche durch einen ein Ausgangssignal generierenden Sensor (34) erfasst wird, wobei ein Parameter dieses Ausgangssignales in funktionellem Zusammenhang mit der Grösse der Auslenkung der Messrolle (32) oder mit der Schichtdicke steht, dadurch gekennzeichnet, dass die Messrolle (32) während des Abrollens an der zu messenden Schicht einer Bremskraft unterworfen wird.

2. Verfahren nach Anspruch 1, dadurch gekennzeichnet, dass wenigstens eines der folgenden Merkmale vorgesehen ist:
a) es wird ein umdrehungsgeschwindigkeitsabhängiges Signal erzeugt und in Abhängijkeit von diesem Signal die Bremskraft für die Messrolle (32) reguliert;
b) die Messrolle (32) wird motorisch mit einer geringeren Geschwindigkeit angetrieben, als die Bewegungsgeschwindigkeit der Schicht bzw. der Fläche vorgesehen ist.

3. Verfahren nach Anspruch 1 oder 2, dadurch gekennzeichnet, dass das Ausgangssignal des Sensors (34) gefiltert wird, und dass vorzugsweise die Grösse der Welligkeit bestimmt und ausgewertet wird, und zweckmässig bei Überschreiten eines Schwellwertes zur Anzeige gebracht wird.

4. Verfahren nach einem der Ansprüche 1 bis 3, dadurch gekennzeichnet, dass das Ausgangssignal des Sensors (34) vor dem Vorhandensein oder vor dem Entstehen der Schicht auf der bewegten Fläche gespeichert wird und während des Vorhandenseins der Schicht auf der bewegten Fläche mit dem vorab gespeicherten Signal zumindest periodisch verglichen wird, und dass vorzugsweise danach das Vergleichsresultat für wenigstens einen der folgenden Schritte herangezogen wird: Regelung der Bewegungsgeschwindigkeit der die Schicht tragenden Fläche, Regelung der Zufuhrmenge des Mahlgutes, Regelung des Druckes, der Temperatur, der Viskosität des Mahlgutes, Sicherung gegen Trockenlauf der Walzen durch Abschalten bei Annäherung an die oder Erreichen der Nullpunktlage und/oder zur Anzeige der Dicke der Schicht.

5. Vorrichtung zur Durchführung des Verfahrens nach einem der Ansprüche 1 bis,4, bei der mindestens eine quer zur Bewegungsrichtung eine Fläche, wie die zylindrische Oberfläche einer Walze (5) eines Walzwerkes (WW), gegen eine Belastungskraft bewegliche Messrolle (32) vorgesehen ist, der ein ihre Bewegung und/oder ihre Position zumindest der Höhe nach über der bewegten Fläche (5) detektierender elektronischer Sensor (34) zugeordnet ist, dadurch gekennzeichnet, dass jeder Messrolle (32) eine Bremseinrichtung (37) zugeordnet ist, deren Bremskraft vorzugsweise in Abhängigkeit von der Bewegungsgeschwindigkeit der Oberfläche der Walze (5) oder der Messrolle (32) regelbar ist.

6. Vorrichtung nach Anspruch 5, dadurch gekennzeichnet, dass die Messrolle (32) ausser in Richtung auf die Oberfläche der Walze (5) auch quer dazu beweglich gelagert ist, und dass vorzugsweise hiezu ein Lagerhebel sich in Bewegungsrichtung der Oberfläche der Walze (5) derart vor der Walze (5) erstreckt, dass die Messrolle (32) von der Walze (5) nacheilend antreibbar ist.

7. Schichtdickenmesseinrichtung nach Anspruch 6, dadurch gekennzeichnet, dass jede Messrolle (32) mit einem Generator drehfest gekuppelt ist, dessen induktiv erzeugter Bremsmoment zur geschwindigkeitsabhängigen Bremsung der Messrolle (32) vorgesehen ist.

8. Vorrichtung nach einem der Ansprüche 5 bis 7, dadurch gekennzeichnet, dass das Verhältnis der Breite (B) der Umfangsfläche jeder Messrolle (32) an der Auflagefläche auf der Schicht oder auf der Walze (5) zu ihrem Durchmesser (D) kleiner als 1:5, insbesondere kleiner als 1:10, vorgesehen ist und/oder dass zwei, vorzugsweise auch quer zur Bewegungsrichtung der Fläche, wie die zylindrische Oberfläche einer Walze (5) eines Walzwerkes (WW), beispielsweise gegen Federkraft, bewegliche Messrollen (32) vorgesehen sind, denen ein ihre Bewegung und/oder ihre Position zumindest der Höhe nach über der Walze (5) detektierender elektronischer Sensor (34) zugeordnet ist.

9. Schichtdickenmesseinrichtung nach einem der Ansprüche 5 bis 8, dadurch gekennzeichnet, dass das Ausgangssignal des Sensors (34) über einen Filter (42; 42') einer Auswertestufe (43; 48-51) zugeführt ist, und dass vorzugsweise das Ausgangssignal des Sensors (34) zur Reduzierung oder Eliminierung von durch etwaige Exzentrizitäten der Walze (5) und/oder der Schicht hervorgerufene Welligkeiten des Signals über ein Tiefpassfilter (42) oder ein Bandpassfilter (42') geführt ist.

10. Schichtdickenmesseinrichtung nach einem der Ansprüche 5 bis 9, dadurch gekennzeichnet, dass die Auswerteeinrichtung eine Umschaltstufe (45) zur wahlweisen Zuführung des vom Sensor (34) abgeleiteten Signales an eine Speichereinrichtung (RAM) oder an eine Vergleichseinrichtung (47) aufweist, der einerseits das aus der Speichereinrichtung (RAM) auslesbare Signal und andererseits das zeitlich aktuelle, vom Ausgangssignal des Sensors (34) abgeleitete Signal zuführbar sind, dass vorzugsweise mit dem Ausgang der Vergleichseinrichtung (47) ein Eingang einer Regeleinrichtung (22) für mindestens einen Parameter zur Steuerung des Walzwerkes (WW) verbunden ist, und dass gegebenenfalls ein Wahlschalter (58) vorgesehen ist, der zur Betätigung der Umschalteinrichtung (45) in Abhängigkeit vom Betriebszustand des Walzwerkes (WW), wie Normalbetrieb oder Anfahr- oder Auslaufbetrieb, vorgesehen ist.

## Claims

1. A method of measuring the thickness of a layer of paste-like or dough-like ground material on a surface in motion, against which surface a movably mounted measuring roller (32) is placed so that during the movement of the surface which is provided with the layer the excursion of the measuring roller (32) transverse to the direction of movement of the surface is detected by a sensor (34) which generates an output signal, wherein a parameter of this output signal bears a functional relationship to the magnitude of the excursion of the measuring roller (32) or to the layer thickness, characterised in that the measuring roller (32) is subjected to a braking force while it rolls on the layer to be measured.

2. A method according to claim 1, characterised in that at least one of the following features is provided:
a) a signal which depends on the rotational speed is generated and the braking force for the measuring roller (32) is regulated depending on this signal;
b) the measuring roller (32) is motor-driven at a lower speed than the speed of movement of the layer or of the surface which is provided.

3. A method according to claim 1 or 2, characterised in that the output signal of the sensor (34) is filtered, and that the magnitude of the ripple is preferably determined and evaluated and is advantageously indicated when a threshold value is exceeded.

4. A method according to any one of claims 1 to 3, characterised in that the output signal of the sensor (34) is stored before the layer is present or arises on the surface in motion and during the presence of the layer on the surface in motion it is compared at least periodically with the previously stored signal, and that the result of the comparison is preferably utilised thereafter for one of the following steps: regulating the speed of movement of the surface carrying the layer, regulating the amount of ground material which is fed, regulating the pressure, temperature or viscosity of the ground material, protecting the rolls from running dry by switching off when approaching or reaching the zero point position, and/or for indicating the thickness of the layer.

5. A device for carrying out the method according to any one of claims 1 to 4, wherein at least one measuring roller (32) is provided which can move against a load transverse to the direction of movement of a surface, such as the cylindrical surface of a roll (5) of a roller mill (WW), with which measuring roller an electronic sensor (34) is associated which detects its movement and/or its position at least according to its height above the surface (5) in motion, characterised in that a braking device (37) is associated with each measuring roller (32), the braking force of which braking device can preferably be regulated depending on the speed of movement of the surface of the roll (5) or of the measuring roller (32).

6. A device according to claim 5, characterised in that in addition to being mounted so that it can move towards the surface of the roll (5), the measuring roller (32) is also mounted so that it can move transverse thereto, and that for this purpose a bearing lever preferably extends in front of the roll (5) in the direction of movement of the surface of the roll (5) so that the measuring roller (32) can be driven by the roll (5) with lag.

7. A layer thickness measuring device according to claim 6, characterised in that each measuring roller (32) is coupled rotationally fixed to a generator, the inductively produced braking moment of which is provided for the speed-dependent braking of the measuring roller (32).

8. A device according to any one of claims 5 to 7, characterised in that the ratio of the width (B) of the circumferential area of each measuring roller (32) on the contact area on the layer or on the roll (5) to its diameter (D) is less than 1:5, particularly less than 1:10, and/or that two measuring rollers (32) are provided, which can also preferably be moved, against a spring force for example, transverse to the direction of movement of the surface, such as the cylindrical surface of a roll (5) of a roller mill (WW), with which measuring rollers an electronic sensor (34) is associated, which sensor detects their movement and/or their position at least according to their height above the roll (5).

9. A layer thickness measuring device according to any one of claims 5 to 8, characterised in that the output signal of the sensor (34) is fed via a filter (42;42') to an evaluation stage (43; 48-51), and that the output signal of the sensor (34) is preferably fed via a low-pass filter (42) or a band-pass filter (42') for the reduction or elimination of ripples in the signal caused by any eccentricities of the roll (5) and/or of the layer.

10. A layer thickness measuring device according to any one of claims 5 to 9, characterised in that the evaluation device has a change-over stage (45) for feeding the signal derived from the sensor (34) alternatively to a memory device (RAM) or to a comparator device (47), to which change-over device firstly the signal which can be read out from the memory device (RAM) can be fed and to which secondly the temporally relevant signal derived from the output signal of the sensor (34) can be fed, that an input of the controller (22) for at least one parameter for controlling the roller mill (WW) is preferably connected to the output of the comparator device (47), and that a selector switch (58) is optionally provided. which is provided for operating the change-over device (45) depending on the operating state of the roller mill (WW) such as normal operation or start-up or run-out operation.

## Revendications

1. Procédé destiné à mesurer l'épaisseur d'une couche d'un produit à broyer sous forme pâteuse ou semi-pâteuse sur une surface en mouvement, surface contre laquelle est appliquée un galet de mesure (32) monté de manière mobile, de sorte que durant le mouvement de la surface pourvue de la couche, la déviation du galet de mesure (32), transversalement à la direction de mouvement de la surface, est relevée à l'aide d'un détecteur (34) générant un signal de sortie, un paramètre de ce signal de sortie étant en relation fonctionnelle avec la grandeur de la déviation du galet de mesure (32) ou avec l'épaisseur de la couche, caractérisé en ce que le galet de mesure (32) est soumis à une force de freinage durant son mouvement de roulement sur la couche à mesurer.

2. Procédé selon la revendication 1, caractérisé en ce qu'est prévue l'une au moins des caractéristiques suivantes:
a) on produit un signal fonction de la vitesse de rotation, et la force de freinage pour la galet de mesure (32) est régulée en fonction de ce signal;
b) le galet de mesure (32) est entraîné par un moteur, à une vitesse plus faible que la vitesse de mouvement qui est prévue pour la couche ou la surface.

3. Procédé selon la revendication 1 ou 2, caractérisé en ce que le signal de sortie du détecteur (34) est filtré, et en ce que de préférence la grandeur de l'ondulation est déterminée et traitée, et est avantageusement visualisée lors du dépassement d'une valeur de seuil.

4. Procédé selon l'une des revendications 1 à 3, caractérisé en ce que le signal de sortie du détecteur (34) est mémorisé avant la présence ou avant la formation de la couche sur la surface en mouvement, et est comparé au moins périodiquement, durant la présence de la couche sur la surface en mouvement, au signal précédemment mémorisé, et en ce que le résultat de comparaison est de préférence utilisé ensuite pour l'une au moins des étapes suivantes: régulation de la vitesse de mouvement de la surface portant la couche, régulation du débit d'alimentation du produit à broyer, régulation de la pression, de la température, de la viscosité du produit à broyer, sécurité à l'encontre d'une marche à sec des cylindres par arrêt lors du rapprochement de la position de point zéro ou lorsque ce point est atteint, et/ou pour la visualisation de l'épaisseur de la couche.

5. Dispositif pour la mise en oeuvre selon l'une des revendications 1 à 4, dans lequel est prévu au moins un galet de mesure (32) mobile à l'encontre d'une force de sollicitation transversalement à la direction de mouvement d'une surface, telle que la surface cylindrique d'un cylindre d'un ensemble à cylindres (WW), un détecteur électronique (34) étant associé au galet de mesure et détectant son mouvement et/ou sa position au moins quant à la hauteur au-dessus de la surface (5) en mouvement, caractérisé en ce qu'à chaque galet de mesure (32) est associé un dispositif de freinage (37) dont la force de freinage peut être régulée de préférence en fonction de la vitesse du mouvement de la surface du cylindre (5) ou du galet de mesure (32).

6. Dispositif selon la revendication 5, caractérisé en ce que le galet de mesure (32), en-dehors de la direction vers la surface du cylindre (5), est également monté mobile transversalement à cette direction, et en ce qu'à cet effet, un levier de palier s'étend de préférence devant le cylindre (5) dans la direction de mouvement de la surface du cylindre (5), de manière telle, que le galet de mesure (32) puisse être entraîné par le cylindre (5) en étant traîné en retard.

7. Dispositif de mesure de l'épaisseur d'une couche selon la revendication 6, caractérisé en ce que chaque galet de mesure (32) est couplé de manière fixe en rotation à un générateur, dont le couple de freinage produit de manière inductive, est prévu pour le freinage du galet de mesure (32) en fonction de la vitesse.

8. Dispositif selon l'une des revendications 5 à 7, caractérisé en ce que le rapport de la largeur (B) de la surface périphérique de chaque galet de mesure (32) au niveau de la surface d'appui sur la couche ou sur le cylindre (5), à son diamètre (D), est prévu inférieur à 1:5, notamment inférieur à 1:10, et/ou en ce que sont prévus deux galets de mesure (32), de préférence également mobiles transversalement à la direction de mouvement de la surface, telle que la surface cylindrique d'un cylindre (5) d'un ensemble à cylindres (WW), par exemple à l'encontre d'une force élastique, un détecteur électronique (34) étant associé aux galets de mesure et détectant leur mouvement et/ou leur position au moins quant à la hauteur au-dessus du cylindre (5).

9. Dispositif de mesure de l'épaisseur d'une couche selon l'une des revendications 5 à 8, caractérisé en ce que le signal de sortie du détecteur (34) est envoyé, par l'intermédiaire d'un filtre (42; 42'), à un étage de traitement (43; 48-51), et en ce que le signal de sortie du détecteur (34) transite de préférence par un filtre passe-bas (42) ou un filtre passe-bande (42') pour réduire ou éliminer des ondulations du signal, produites par d'éventuelles excentricités du cylindre (5) et/ou de la couche.

10. Dispositif de mesure de l'épaisseur d'une couche selon l'une des revendications 5 à 9, caractérisé en ce que le dispositif de traitement comporte un étage de commutation (45) destiné à envoyer sélectivement le signal délivré par le détecteur (34), à un dispositif à mémoire (RAM) ou à un dispositif de comparaison (47) auquel peuvent être amenés, d'une part le signal pouvant être lu dans le dispositif à mémoire (RAM), et d'autre part le signal instantané actuel dérivé du signal de sortie du détecteur (34), en ce qu'à la sortie du dispositif de comparaison (47) est de préférence reliée une entrée d'un dispositif de régulation (22) pour au moins un paramètre destiné à la commande de l'ensemble à cylindres (WW), et en ce que, le cas échéant, est prévu un commutateur de sélection (58) qui est destiné à l'actionnement du dispositif de commutation (45) en fonction de l'état de fonctionnement de l'ensemble à cylindres (WW), tel que la marche normale ou la marche de démarrage ou de fin d'opération.
